# EUROPEAN PATENT SPECIFICATION

(11) **EP 1 592 723 B1**
(45) Date of publication and mention of the grant of the patent: **20.01.2010**
(21) Application number: 04707710.2
(22) Date of filing: 03.02.2004
(51) Int. Cl.: C08F 290/00

(54) **RUBBER MODIFIED POLYMERS FROM VINYL AROMATIC MONOMERS**
KAUTSCHUKMODIFIZIERTE POLYMERE VON VINYLAROMATISCHEN MONOMEREN
POLYMERES MODIFIES PAR DU CAOUTCHOUC OBTENUS A PARTIR DE MONOMERES AROMATIQUES VINYLIQUES

(30) Priority: 05.02.2003 US 445522 P
(43) Date of publication of application: 09.11.2005
(73) Proprietor: DOW GLOBAL TECHNOLOGIES INC., Midland MI 48674 (US)
(72) Inventor: MYERS, Michael, O., Baton Rouge, LA 70808 (US); DEMIRORS, Mehmet, Pearland, Texas 77584 (US); KING, Bruce, A., Midland, MI 48640 (US); GALOBARDES, Mercedes, R., Saginaw, MI 48603 (US)
(74) Representative: Raynor, John
(86) International application number: PCT/US2004/002890
(87) International publication number: WO 2004/072137

(56) References cited:
- US-A- 3 862 102
- US-A- 5 721 320
- US-A1- 2002 045 705
- US-B1- 6 255 402

## Description

This invention relates to rubber modified polymers produced from vinyl aromatic monomers.

Rubber-modified polymers such as high impact polystyrene (HIPS) and acrylonitrile/butadiene/styrene (ABS) are typically produced by polymerizing styrene or styrene/acrylonitrile in the presence of a dissolved rubber, such that the rubber is dispersed within the polymer matrix in the form of discrete rubber particles containing occluded matrix polymer therein. The physical properties of the rubber modified polymer can be enhanced with grafted rubber, particularly with increased levels of grafting. During the process of making the rubber modified polymer, matrix polymers are grafted onto the rubber backbone. In order to increase the degree of grafting, certain initiators, such as peroxide initiators, can be used which abstract hydrogen atoms from the rubber polymer backbone. However, this method may also cause increased reactivity, making the reaction difficult to control.

There have been previous attempts to increase the level of rubber grafting. One approach includes hydroperoxidation of a rubber using singlet oxygen (SO) which results in an added number of reactive grafting sites on the rubber backbone. Generation of SO photochemically in a rubber/styrene mixture containing dissolved oxygen has been reported in U.S. Patent No. 4,717,741 by Hahnfeld et al. However, the number of reactive grafting sites obtained is limited by the solubility of oxygen in the rubber/styrene mixture. Additionally, photosensitizers must be used which act as contaminants in the final polymer, causing discoloration. Additionally, solubilizers are used for the photosensitizer which end up in the recycle stream and must be separated from the styrene monomer, making this process economically unattractive.

Another approach involves generating SO in a rubber/styrene mixture by heating a compound which releases SO, such as bisquinone peroxide as described in U.S. 4,895,907 by Priddy et al. However, relatively low levels of grafting were achieved and bisquinone peroxides are not available for commercial use.

Yet another approach involves generating SO from triphenylphosphite ozonides to increase the grafting onto a polybutadiene rubber for the preparation of polybutadiene-modified polystyrene, as disclosed in "Polybutadiene Hydroperoxide by Singlet Oxygen: Its Grafting and Morphology in Polystyrene Matrix", Journal of Applied Polymer Science, Vol. 31,1827-1842 (1986) by Peng. However, the process described does not achieve high levels of grafting as hypothesized by Peng.

US-A-6255402 and US-A-5721320 disclose compositions comprising a vinylaromatic polymer matrix, and particles of rubber, in which a stable free radical is employed to functionalize the rubber.

U. S. 5,959, 033 discloses a method of producing highly grafted rubber in high impact styrene polymers using SO by decomposition of phosphite ozonides in the vinyl aromatic monomer and rubber feed of a mass polymerization process, such that at least 30 percent grafting is achieved at the point of phase inversion. However, this process requires the additional ozonide reactant and adds complexity to the reaction process.

Therefore, it remains highly desirable to obtain rubber modified polymers from vinyl aromatic monomers, having highly grafted rubber particles, utilizing a process which is easily controlled, efficient and commercially viable, without the disadvantages of the prior art.

In one aspect the present invention is a process for producing a high impact polystyrene (HIPS) or acrylonitrile/butadiene/styrene (ABS) rubber modified polymer, comprising polymerizing a vinyl aromatic monomer in the presence of a dissolved rubber, whereby polymerization proceeds through a process of phase inversion to produce a matrix polymer having dispersed discrete rubber particles containing occlusions of matrix polymer therein, wherein the rubber is a functionalized rubber containing a functionality which contains carbon-carbon unsaturation, does not form a stable free radical and is capable of reacting with the matrix polymer, such that at least 30 percent of the functionalized rubber is grafted with matrix polymer at the point of phase inversion, and wherein the rubber polymer used has a weight average molecular weight (Mw) of at least 10,000 as measured by gel permeation chromatography (GPC).

The process allows for the efficient and cost effective production of rubber modified polymers containing highly grafted rubbers without the deficiencies of the prior art.

The rubber modified polymer produced contains highly grafted rubber combined with the defined graft/matrix ratio and has enhanced physical properties and economic advantage when compared to rubber modified polymers of the prior art.

The rubber modified polymers comprise a matrix polymer, and a grafted rubber. Matrix polymer is grafted to a functionalized rubber, which is dispersed throughout the remaining matrix polymer in the form of discrete rubber particles containing occlusions of matrix polymer therein.

The matrix polymer can be any polymer produced from a vinyl aromatic monomer.

Suitable vinyl aromatic monomers include, but are not limited to, those vinyl aromatic monomers known for use in polymerization processes, such as those described in US-A-4,666,987, US-A-4,572,819 and US-A-4,585, 825. Preferably, the monomer is of the formula :

Ar-CR'=CH₂

wherein R' is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group.

Preferably, Ar is phenyl or alkylphenyl, wherein alkylphenyl refers to an alkyl substituted phenyl group, with phenyl being most preferred. Typical vinyl aromatic monomers which can be used include: styrene, alpha-methylstyrene, all isomers of vinyl toluene, especially paravinyltoluene, all isomers of ethyl styrene, propyl styrene, vinyl biphenyl, vinyl naphthalene, vinyl anthracene, and mixtures thereof. The vinyl aromatic monomers may also be combined with othercopolymerizable monomers. Examples of such monomers include, but are not limited to acrylic monomers such as acrylonitrile, methacrylonitrile, methacrylic acid, methyl methacrylate, acrylic acid, and methyl acrylate; maleimide, phenylmaleimide, and maleic anhydride. Impact modified, or grafted rubber containing products are additionally described in US-A-3,123, 655, US-A-3,346, 520, US-A-3,639, 522, and US-A-4,409, 369.

The weight average molecular weight (Mw) of the matrix polymer is typically 50,000 to 500,000, preferably 60,000 to 400,000 and most preferably 80,000 to 350,000.

The grafted rubber comprises a rubber substrate containing grafts of the matrix polymer, obtained by reacting the matrix polymer with the functional group of the functionalized rubber. The functionalized rubber can be any unsaturated functionalized rubbery polymer fulfilling the specified criteria having a glass transition temperature of not higher than 0°C, preferably not higher than -20°C, as determined by ASTM D-756-52T, containing at least 1 functional group per rubber molecule, wherein the functional group(s) is capable of reacting with the matrix polymer under polymerization conditions. The functionalized rubber suitable for the present invention are those that have a solution viscosity in the range of 5 to 300 cps (5 percent by weight styrene at 20° C) and Mooney viscosity of 5 to 100 (ML+1, 100° C). Suitable rubbers include, but are not limited to, functionalized diene rubbers, butyl rubbers, ethylene-propylene-diene monomer (BPDM) rubbers, and silicone rubbers. Suitable functionalized dine rubbers include, but are not limited to, functionalized conjugated 1,3-dienes, for example, butadiene, isoprene, piperylene, chloroprene, or mixtures thereof. Suitable functionalized rubbers also include functionalized homopolymers of conjugated 1,3-dienes and functionalized interpolymers of conjugated 1,3-dienes with one or more copolymerizable monoethylenically unsaturated monomers, for example, copolymers of isobutylene and isoprene. Preferably, the functionalized rubber is a functionalized homopolymer of a 1,3-conjugated diene such as functionalized butadiene, isoprene, piperylene, chloroprene, or a functionalized copolymer of a conjugated diene with one or more vinyl aromatic monomers such as styrene; alpha, beta-ethylenically unsaturated nitriles such as acrylonitrile; alpha-olefins such as ethylene or propylene. If the functionalized rubber is a copolymer of a vinyl aromatic monomer, then the vinyl aromatic content of the functionalized rubber is less than 30 percent by weight. Other functionalized rubbers include functionalized branched rubbers and functionalized low solution viscosity rubbers. Mixtures of functionalized rubbers can also be used.

Most preferred functionalized rubbers are functionalized homopolymers of 1,3-butadiene. Other non-functionalized rubbers such as linear diene rubbers, diene copolymer rubbers, block copolymer rubbers, for example, styrene-butadiene-styrene block copolymers, can be combined with the highly grafted rubbers used in the rubber modified polymers of the present invention, as long as the advantages of the present invention are still obtained. Typically, the functionalized rubber comprises at least 50 weight percent of the total weight of rubber within the rubber modified vinyl aromatic polymer, preferably at least 55 percent, more preferably at least 60 percent, and most preferably at least 65 percent. In one embodiment, the functionalized rubber is used in the absence of any non-functionalized rubbers.

The grafted rubber is obtained by grafting the matrix polymer onto the functionalized rubber backbone during polymerization of the matrix polymer. This is accomplished by polymerizing a vinyl aromatic monomer in the presence of a functionalized rubber having at least one functional group per rubber molecule, wherein the functional group is reactive with the matrix polymer under polymerization conditions. The functional group, which will react with the matrix polymer to form a grafted copolymer, is a functional group containing carbon-carbon unsaturation. Typical functional groups include maleates; acrylates, (alkyl)acrylates such as methylmethacrylate, n-propyl methacrylate, ethyl methacrylate, cyclohexyl methacrylate; fumarates, itaconate, citraconate, vinyl ether, vinyl ester, cinnamate, maleimides and derivatives thereof. The functional group does not act as a polymerization initiator or form a stable free radical. The rubber can be functionalized by any process suitable for bonding a functional group to the rubber backbone. Such methods are well known by those skilled in the art. Functionalization typically occurs prior to the addition of the functionalized rubber to the rubber modified polymer polymerization process.

In one embodiment, the functionalized rubbers are obtained by the incorporation of copolymerizable functional groups in the rubber backbone. These units are typically chosen in such a way that they copolymerize with the vinyl aromatic monomers used to produce the matrix polymer and as such, act as anchor points for the grafting process. The functional groups have a level of reactivity with the vinyl aromatic monomers such that they are more than 30 percent reacted more preferably more than 35 percent, and most preferably more than 40 percent, by the time phase inversion occurs. If this level of reactivity is not achieved, the desirable benefits are not realized. If the functional group of the rubber backbone has a high reactivity towards vinyl aromatic monomers, a single functional group per rubber molecule is sufficient. Functionalization using maleate, fumarate, maleimide, acrylate and methacrylate functional groups, typically lead to a polybutadiene chain terminated with a single functional group as exemplified below:

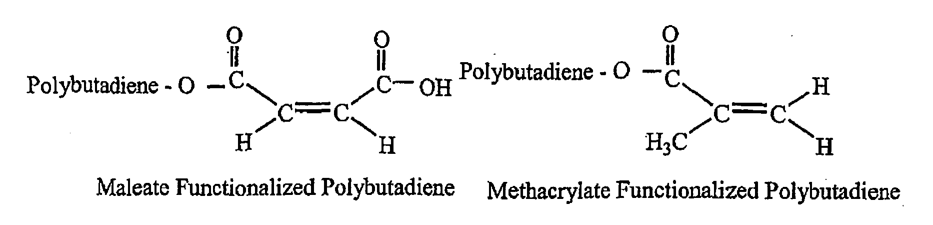

Alternatively, during the course of the polymerization of butadiene, pendant vinyl groups can be introduced by reacting the butadiene with a compound having the desired functional groups. The copolymer unit must have sufficient reactivity in order to obtain the desired grafting at phase inversion, or a sufficient amount of such units must be included in order for such reactivity to be attained. If the functional group has a low reactivity, then a higher number of groups must be incorporated into the rubber chains such that the desired level of grafting is achieved. As grafting increases, smaller rubber particles are achieved which leads to higher gloss and impact properties. Preferably, the functionalized rubber has a sufficient number of grafting sites such that a 30 percent level of grafting can be achieved at the point of phase inversion. In other words, the rubber is grafted with monovinylidene aromatic polymer to the extent that the amount of grafted rubber is at least 30 percent of the total rubber at phase inversion.

The weight average molecular weight (Mw) of the rubber polymer is from 10,000 to 600,000, typically from 30,000 to 500,000, preferably from 40,000 to 400,000, more preferably from 45,000 to 400,000, and most preferably from 50,000 to 350,000 as measured by gel permeation chromatography (GPC).

Rubber, that is, the total amount of functionalized rubber and non-functionalized rubber if present, is typically present in amounts such that the rubber modified polymer contains from 2 to 30, generally from 4 to 25, preferably from 5 to 20, and more preferably from 8 to 20 weight percent rubber, based on the total weight of the monomer and rubber components. The amount of rubber present is also dependent upon the final polymer product desired. Typically, for polymers such as HIPS, the amount of rubber within the rubber modified polymer is from 5 to 15 wt. percent. ABS polymers typically contain from 5 to 30 wt. percent rubber. The term "rubber" or "rubber equivalent" as used herein is intended to mean, for a rubber homopolymer, such as polybutadiene, simply the amount of rubber, and for a block copolymer, the amount of the copolymer made up from monomer which when homopolymerized forms a rubbery polymer, such as for a butadiene-styrene block copolymer, the amount of the butadiene component of the block copolymer.

In one embodiment of the present invention, the matrix polymer is a copolymer of styrene and acrylonitrile and the functionalized rubber is a methacrylate functionalized polybutadiene. In this embodiment the weight ratio of styrene to acrylonitrile varies from 99:1 to 60:40.

In another embodiment, the matrix polymer is polystyrene and the functionalized rubber is a functionalized polybutadiene.

The grafted rubber particles typically have a volume average particle size of from 0.01 to 10 microns, depending upon the application. The composition may be monomodal, bimodal or multi-modal depending upon the application as well.

Another aspect of the present invention relates to a process for producing such rubber modified polymers. In general, the rubber modified polymers of the present invention are produced by a continuous mass polymerization as described in U.S. 4,640,959 combined with in-situ grafting, such that at least a 30 percent, preferably at least a 35 percent degree of grafting is achieved at the point of phase inversion. It is noted that additional grafting may occur after phase inversion, wherein up to 10 or even 20 percent additional grafting may occur. Therefore, rubber modified vinyl aromatic polymers produced by this process would contain functionalized rubbers having at least a. 35 percent, preferably at least 40 percent, and up to 100 percent degree of grafting.

The mass polymerization can be conducted in the presence of additives such as initiators, chain transfer agents, and lubricants. Typical initiators include peroxides such as t-butyl hydroperoxide, di-t-butyl peroxide, cumene hydroperoxide, dicumyl peroxide, 1,1-bis(t-butylperoxy)cyclohexane, benzoyl peroxide, 1,1-bis(4,4-di-t-butyl peroxy cyclohexane) propanone; and azo compounds such as azo-bis-isobutyrate and azo bis-cyanovaleric acid. Typical chain transfer agents include mercaptans such as n-dodecyl mercaptan and t-dodecyl mercaptan, alpha-methylstyrene dimer, 1-phenyl-butene-2-fluorene, terpinol, and chloroform. Other additives such as lubricants, for example, stearic acid, behenic acid, stearoamidic acid; oxidation inhibitors, for example, hindered phenols; plasticizers, for example, mineral oil, polyethylene glycol; flame retarding agents, photo stabilizers, coloring agents, fiber reinforcing agents, and fillers can also be used.

Solvents may also be employed in the mass polymerization process. Typical solvents include aromatic hydrocarbons such as toluene, benzene, ethyl benzene, xylene, hydrocarbons such as heptane, hexane, and octane. Preferably ethyl benzene or toluene are employed. In general, the solvent is employed in amounts sufficient to improve the processability and heat transfer during polymerization. Such amounts will vary depending on the rubber, monomer and solvent employed, the process equipment and the desired degree of polymerization. If employed, the solvent is generally employed in an amount of up to 35 weight percent, preferably from 2 to 25 weight percent, based on the total weight of the solution.

Preferably the polymerization is conducted in one or more substantially linear, stratified flow or so-called "plug flow" type reactors such as describe in U.S. Pat. No. 2,727,854 or alternatively, in a stirred tank reactor wherein the contents of the reactor are essentially uniform throughout, which stirred tank reactor is generally employed in combination with one or more "plug-flow" type reactors. The temperatures at which polymerization is most advantageously conducted are dependent on a variety of factors including the specific initiator, type and concentration of rubbers, and the co-monomer and reaction solvent, if any, employed. In general, polymerization temperatures range from 60 to 160 °C prior to phase inversion with temperatures from 100 to 190 °C being employed subsequent to phase inversion.

A process of grafting the functionalized rubber, such that at least a 30 percent, preferably at least a. 35 percent degree of grafting is achieved at the point of phase inversion, is also utilized during the polymerization process. Degree of grafting refers to the ratio of functionalized grafted rubber to the total amount of functionalized rubber present. In other words if a functionalized rubber has at least a 30 percent degree of grafting, then at least 30 percent of the functionalized rubber contains at least one grafted chain of matrix polymer.

In one embodiment, the present invention is a rubber modified polymer consisting essentially of:
a) a polymer matrix comprising a polymerized vinyl aromatic monomer, and
b) a grafted rubber, dispersed within the polymer matrix in the form of discrete rubber particles containing occluded matrix polymer therein, wherein the grafted rubber is characterized by:
   i) a degree of grafting of from 30 to 100 percent at the point of phase inversion,
   ii) an amount of matrix polymer grafted to the rubber of from 20 to 75 weight percent of the total amount of matrix polymer, and
   iii) being produced by reacting the matrix polymer with a functionalized rubber, wherein the functional group is capable of reacting with the matrix polymer under polymerization conditions, thus grafting the matrix polymer to the rubber.

The terms 'consisting essentially of' refer to the listed components of the composition and may including minor amounts of other additives which would not significantly alter the physical properties or performance of the rubber modified polymer composition.

The rubber modified polymers of the present invention can be used in a number of applications such as housings for small appliances, electronic equipment, and office equipment.

The polymerization process used to produce such polymers is an efficient, economical and commercially viable process to produce rubber modified polymers containing highly grafted rubbers which exhibit enhanced physical properties, without the use of additional reactants.

The following examples are provided to further illustrate the present invention. The examples are not intended to limit the scope of the present invention, and they should not be so interpreted or construed. Unless stated to the contrary, all parts and percentages are based on weight.

### EXAMPLE 1

A composition containing 51.2 percent styrene, 20.8 percent acrylonitrile, 17.5 percent ethylbenzene and 10.5 percent rubber is fed at a rate of 552 g/hr into the first zone of a stirred tube reactor having a volume capable of holding about 1225 grams of polymer. (50 percent of the rubber is an non-functionalized butadiene-styrene (85/15) block copolymer, 50 percent of rubber is the same composition block copolymer but with a methacrylate end group) The reactor is equipped with an agitator set at 120 rpm and comprises three zones, zone 1 being at 107°C, zone 2 at 111°C, and zone 3 at 116°C. Additionally, a feed stream containing 0.4 wt. n-dodecylmercaptan, and 1.7 wt. 1,1-di-terbutyl peroxy cyclohexane in 97.9 percent ethylbenzene is added to zone 1 at a rate of 34 g/hr. The polymerization is initiated in zone 1 and continues through zones 2 and 3. In zone 3 an additional feed of 2.95 percent n-dodecylmercaptan in ethylbenzene is added at a rate of 30 g/hr. After polymerization in zone 3, the polymerizing mixture is transferred to a second reactor equipped with an agitator set at 100 rpm and comprised of three zones, zone 4 being at 118°C, zone 5 at 119°C and zone 6 at 123°C. The mixture is then transferred to a third reactor equipped with an agitator set at 30 rpm and comprised of three zones, zone 7 being 131°C, zone 8 at 142°C and zone 9 at 152°C. The mixture is then transferred to a devolatolizer at a temperature of 235°C.

### EXAMPLE 2

The polymerization reaction described in EXAMPLE 1 is repeated with essentially the same composition of the starting materials, with the exception of the rubber comprising entirely methacrylate-functionalized rubber.

### COMPARATIVE EXAMPLE

As a. comparative example, the polymerization reaction of EXAMPLE 1 is repeated using only the non-functionalized rubber as the rubber component. The resultant styrenic polymers from the EXAMPLES above are injection molded using a melt temperature of about 230°C and a mold surface temperature of about 3S°C. The values given for short shot gloss is obtained using a low holding pressure in the injection molding cycle, whereas the full shot gloss is measured on a fully packed part. Rubber particle size is measured using Transmission Electron Microscopy. Results of certain physical properties are reported in Table 1. It is readily apparent that the use of functionalized rubbers greatly reduces the average rubber particle size and imparts significantly higher gloss on surfaces of the molded parts.

**TABLE 1**

| | Example 1 | Example 2 | Comparative Example |
|---|---|---|---|
| Particle Size (Dv, µ) | 0.35 | 0.63 | 0.86 |
| Short Shot Gloss | 63 | 47 | 21 |
| Full Shot Gloss | 89 | 83 | 57 |
| Notched Izod J/m ASTM D256 | 63.6 | 302.1 | 312.7 |

## Claims

1. A process for producing a high impact polystyrene (HIPS) or acrylonitrile/butadiene/styrene (ABS) rubber modified polymer, wherein the process comprises polymerizing a vinyl aromatic monomer in the presence of a dissolved rubber, whereby polymerization proceeds through a process of phase inversion to produce a matrix polymer having dispersed discrete rubber particles containing occlusions of matrix polymer therein,
wherein the rubber is a functionalized rubber containing a functionality which contains carbon-carbon unsaturation, does not form a stable free radical and is capable of reacting with the matrix polymer, such that at least 30 percent of the functionalized rubber is grafted with matrix polymer at the point of phase inversion,
wherein the rubber polymer used has a weight average molecular weight (Mw) of at least 10,000 as measured by gel permeation chromatography (GPC).

2. The process of Claim 1, wherein the functionalized rubber is a functionalized conjugated diene polymer rubber.

3. The process of Claim 2, wherein the functionalized rubber is a functionalized polybutadiene rubber.

4. The process of Claim 1, wherein the functionalized rubber contains a functional group selected from maleates ; acrylates, (alkyl) acrylates;fumarates, itaconate, citraconate, vinyl ether, vinyl ester, cinnamate, maleimides and derivatives thereof.

5. The process of Claim 1, wherein the functionalized rubber is maleated polybutadiene rubber or methacrylated polybutadiene rubber.

6. The process of Claim 1, wherein the vinyl aromatic monomer is styrene.

7. The process of Claim 1, wherein the matrix polymer comprises a styreneacrylonitrile copolymer.

8. The process of Claim 1, wherein the grafted rubber comprises at least 50 weight percent of a grafted functionalized rubber.

9. The process of Claim 1 wherein the rubber used has a weight average molecular weight (Mw) of from 50,000 to 350,000, as measured by gel permeation chromatography (GPC).

10. The process of Claim 1 wherein the polymerization is carried out so as to produce a rubber modified polymer having an amount of matrix polymer grafted to the rubber of from 20 to 75 weight percent of the total amount of matrix polymer

## Patentansprüche

1. Verfahren zur Herstellung eines kautschukmodifizierten Polymers in Form von hochschlagfestem Polystyrol (HIPS) oder AcryInitril/Butadien/Styrol (ABS), wobei das Verfahren Polymerisieren eines aromatischen Vinylmonomers in Gegenwart eines gelösten Kautschuks umfasst, wobei die Polymerisation über einen Prozess der Phaseninversion fortschreitet, um ein Matrixpolymer zu erzeugen, das dispergierte diskrete Kautschukteilchen, die darin Einschlüsse von Matrixpolymer aufweisen, enthält,
wobei der Kautschuk ein funktionalisierter Kautschuk ist, der eine Funktionalität enthält, die Kohlenstoff-Kohlenstoff-Ungesättigtheit aufweist, kein stabiles freies Radikal bildet und fähig ist, mit dem Matrixpolymer zu reagieren, so dass mindestens 30% des funktionalisierten Kautschuks mit dem Matrixpolymer am Punkt der Phaseninversion verpfropft werden, wobei das verwendete Kautschukpolymer ein gewichtsmittleres Molekulargewicht (Mw) von mindestens 10.000, wie mithilfe von Gelpermeationschromatographie (GPC) gemessen, aufweist.

2. Verfahren nach Anspruch 1, wobei der funktionalisierte Kautschuk ein funktionalisierter Kautschuk aus einem Polymer eines konjugierten Diens ist.

3. Verfahren nach Anspruch 2, wobei der funktionalisierte Kautschuk ein funktionalisierter Polybutadienkautschuk ist.

4. Verfahren nach Anspruch 1, wobei der funktionalisierte Kautschuk eine funktionelle Gruppe enthält, die aus Maleaten, Acrylaten, (Alkyl)acrylaten, Fumaraten, Itaconat, Citraconat, Vinylether, Vinylester, Cinnamat, Maleinimiden und Derivaten derselben ausgewählt ist.

5. Verfahren nach Anspruch 1, wobei der funktionalisierte Kautschuk maleatfunktionalisierter Polybutadienkautschuk oder methacrylierter Polybutadienkautschuk ist.

6. Verfahren nach Anspruch 1, wobei das aromatische Vinylmonomer Styrol ist.

7. Verfahren nach Anspruch 1, wobei das Matrixpolymer ein Styrol/Acrylnitril-Copolymer enthält.

8. Verfahren nach Anspruch 1, wobei der gepfropfte Kautschuk mindestens 50 Gew.-% eines gepfropften funktionalisierten Kautschuks enthält.

9. Verfahren nach Anspruch 1, wobei der verwendete Kautschuk ein gewichtsmittleres Molekulargewicht (Mw) von 50.000 bis 350.000, wie mithilfe von Gelpermeationschromatographie (GPC) gemessen, aufweist.

10. Verfahren nach Anspruch 1, wobei die Polymerisation so durchgeführt wird, um ein kautschukmodifiziertes Polymer zu erzeugen, das eine Menge von Matrixpolymer, das auf den Kautschuk aufgepfropft ist, von 20 bis 75 Gew.-% der Gesamtmenge von Matrixpolymer aufweist.

## Revendications

1. Procédé de production d'un poly(styrène) à haute résistance aux chocs (HIPS) ou d'un polymère modifié par caoutchouc d'acrylonitrile/butadiène/styrène (ABS), dans lequel le procédé comprend la polymérisation d'un monomère de vinyle aromatique en l'absence d'un caoutchouc dissous, moyennant quoi la polymérisation se produit par un processus d'inversion de phase pour produire un polymère de matrice comportant des particules de caoutchouc discrètes dispersées renfermant des occlusions de polymère de matrice,
dans lequel le caoutchouc est un caoutchouc fonctionnalisé contenant une fonctionnalité qui contient une insaturation carbone-carbone, ne forme pas de radical libre stable et est capable de réagir avec le polymère de matrice, de telle sorte qu'au moins 30 pour cent du caoutchouc fonctionnalisé est greffé avec le polymère de matrice au point d'inversion de phase,
dans lequel le polymère de caoutchouc utilisé a une masse moléculaire moyenne en masse (Mm) d'au moins 10 000 telle que mesurée par chromatographie par perméation de gel (CPG).

2. Procédé selon la revendication 1, dans lequel le caoutchouc fonctionnalisé est un caoutchouc de polymère de diène conjugué fonctionnalisé.

3. Procédé selon la revendication 2, dans lequel le caoutchouc fonctionnalisé est un caoutchouc de poly(butadiène) fonctionnalisé.

4. Procédé selon la revendication 1, dans lequel le caoutchouc fonctionnalisé contient un groupe fonctionnel choisi parmi les maléates, les acrylates, les acrylates d'alkyle ; les fumurates, l'itaconate, le citraconate, un vinyl éther, un ester de vinyle, le cinnamate, les maléimides, et leurs dérivés.

5. Procédé selon la revendication 1, dans lequel le caoutchouc fonctionnalisé est un caoutchouc de poly(butadiène) maléaté ou un caoutchouc de poly(budatiène) méthacrylé.

6. Procédé selon la revendication 1, dans lequel le monomère de vinyle aromatique est le styrène.

7. Procédé selon la revendication 1, dans lequel le polymère de matrice comprend un copolymère styrène-acrylonitrile.

8. Procédé selon la revendication 1, dans lequel le caoutchouc greffé comprend au moins 50 pour cent en poids d'un caoutchouc fonctionnalisé greffé.

9. Procédé selon la revendication 1, dans lequel le caoutchouc utilisé a une masse moléculaire moyenne en masse (Mm) de 50 000 à 350 000, telle que mesurée par chromatographie par perméation de gel (CPG).

10. Procédé selon la revendication 1, dans lequel la polymérisation est réalisée de façon à produire un polymère modifié par caoutchouc ayant une quantité de polymère de matrice greffé sur le caoutchouc de 20 à 75 pour cent en poids de la quantité totale de polymère de matrice.
